Europäisches Patentamt

European Patent Office

Office européen des brevets

(11) Veröffentlichungsnummer : **0 213 070**
**B1**

# (12) EUROPÄISCHE PATENTSCHRIFT

(45) Veröffentlichungstag der Patentschrift :
21.12.88

(21) Anmeldenummer : 86810314.4

(22) Anmeldetag : 15.07.86

(51) Int. Cl.⁴ : **B 65 G   1/04**

(54) **Lageranlage.**

(30) Priorität : 07.08.85 CH 3381/85
        22.10.85 CH 4539/85

(43) Veröffentlichungstag der Anmeldung :
04.03.87 Patentblatt 87/10

(45) Bekanntmachung des Hinweises auf die Patenterteilung : 21.12.88 Patentblatt 88/51

(84) Benannte Vertragsstaaten :
AT BE CH DE FR GB IT LI LU NL SE

(56) Entgegenhaltungen :
EP--A-- 0 116 152
DE--A-- 3 306 673
DE--B-- 2 154 709
"fördern und Heben" 24, Nr. 12 (1974), P. Koch
"Leistungsfähiges Lagersystem für Langgut",

(73) Patentinhaber : Sieber, Hans
Alpsteinstrasse 4
CH-9524 Zuzwil (CH)

(72) Erfinder : Sieber, Hans
Alpsteinstrasse 4
CH-9524 Zuzwil (CH)

(74) Vertreter : Kulhavy, Sava, Dipl.-Ing.
Patentanwaltsbüro S.V. Kulhavy Postfach 450 Kornhausstrasse 3
CH-9001 St. Gallen (CH)

## Beschreibung

Die vorliegende Erfindung betrifft eine Lageranlage mit einem Kommissioniergerät, das entlang von Wabenregalen bewegbar ist und eine Hebebühne aufweist, wobei diese Hebebühne eine Arbeitsplattform und einen Lagergutsabschnitt aufweist, der eine Ablageeinrichtung für das Lagergut sowie eine Einrichtung zur Handhabung von Lagergut enthält (siehe z. B. EP-A-116152).

Die Wabenregale einer bekannten Lagereinrichtung dieser Art sind so ausgeführt, dass sie zur Aufnahme einzelner Stücke von Lagergut eingerichtet sind. Die Einrichtung zur Handhabung von Lagergut muss daher derart sein, dass sie die einzelnen Stücke von Lagergut ergreifen kann, um sie in das Innere des Kommissioniergerätes einzuziehen. Im Kommissioniergerät ist eine praktisch glatte und durch auskragende Tragarme gebildete Ablagefläche vorhanden, auf der die ausgewählten Stücke von Lagergut gesammelt werden. Nach der Beendigung einer Kommission werden die Materialstücke derselben mit Hilfe einer Bündelungseinrichtung zusammengebunden und mit Hilfe von in den Tragarmen integrierten Rollen gegen das freie Ende dieser Tragarme transportiert. Spätestens, wenn es keinen Platz mehr auf den Tragarmen gibt, fährt das Kommissioniergerät zu einem Ablagetisch, wo alle Kommissionen abgesetzt werden.

Wenn bei dieser bekannten Anlage mehrere Kommissionen zugleich gemacht werden sollen, dann müssen die Materialstücke der Kommissionen sofort nach Beendigung derselben zusammegebunden werden, denn sonst droht die Gefahr, dass sich die Materialstücke einzelner Kommissionen auf der Ablagefläche vermischen. Die sofortige Bündelung der Materialstücke setzt voraus, dass die Hebebühne mit einer Bündelungseinrichtung versehen ist. Das sofortige Bündeln ist in mancher Hinsicht nachteilig, z. B. wenn am Ablagetisch ungebündelte Kommissionen vorhanden sein sollen. Ausserdem steht das Kommissioniergerät still, wenn die Bedienungsperson mit der Bündelung der Kommissionen beschäftigt ist. Die Arbeitsweise der bekannten Anlage kann wegen der Notwendigkeit der Bündelung der Kommissionen bereits im Kommissioniergerät nicht voll automatisiert werden.

Die Hebebühne dieser bekannten Anlage muss nicht nur mit der Einzugseinrichtung für die einzelnen Materialstücke sondern auch mit der verschiebbar angeordneten Bündelungseinrichtung versehen sein, was unter Umständen Platzprobleme zur Folge haben kann. Diese Probleme würden weiter anwachsen, wenn eine solche Bühne noch mit einer Verschiebeeinrichtung für eine Kassette ausgerüstet sein sollte, in der das Lagergut abgelagert ist. Die Integration der Rollen in die Tragarme und deren Antrieb stellen zudem eine verhältnismässig komplizierte technische Lösung dar.

Die Aufgabe der vorliegenden Erfindung ist, eine Lageranlage zu schaffen, welche die genannten Nachteile nicht aufweist.

Diese Aufgabe wird bei der Lageranlage der eingangs genannten Art erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt :

Fig. 1 perspektivisch die vorliegende Lageranlage mit einem Kommissioniergerät,

Fig. 2 in einer Seitenansicht eine zweite Ausführungsform des Kommissioniergerätes der Anlage nach Fig. 1,

Fig. 3 in einer Seitenansicht eine dritte Ausführungsform des Kommissioniergerätes der Anlage nach Fig. 1,

Fig. 4 in einer Frontansicht eine vierte Ausführungsform des Kommissioniergerätes der Anlage nach Fig. 1,

Fig. 5 in einer Seitenansicht das Gerät aus Fig. 1,

Fig. 6 in einer Seitenansicht eine fünfte Ausführungsform des Kommissioniergerätes der Anlage nach·Fig. 1,

Fig. 7 in einer Seitenansicht die vorliegende Lageranlage,

Fig. 8 in Draufsicht eine weitere Ausführungsform der vorliegenden Lageranlage und

Fig. 9 in Frontansicht ein Detail aus einem Gestell der vorliegenden Lageranlage.

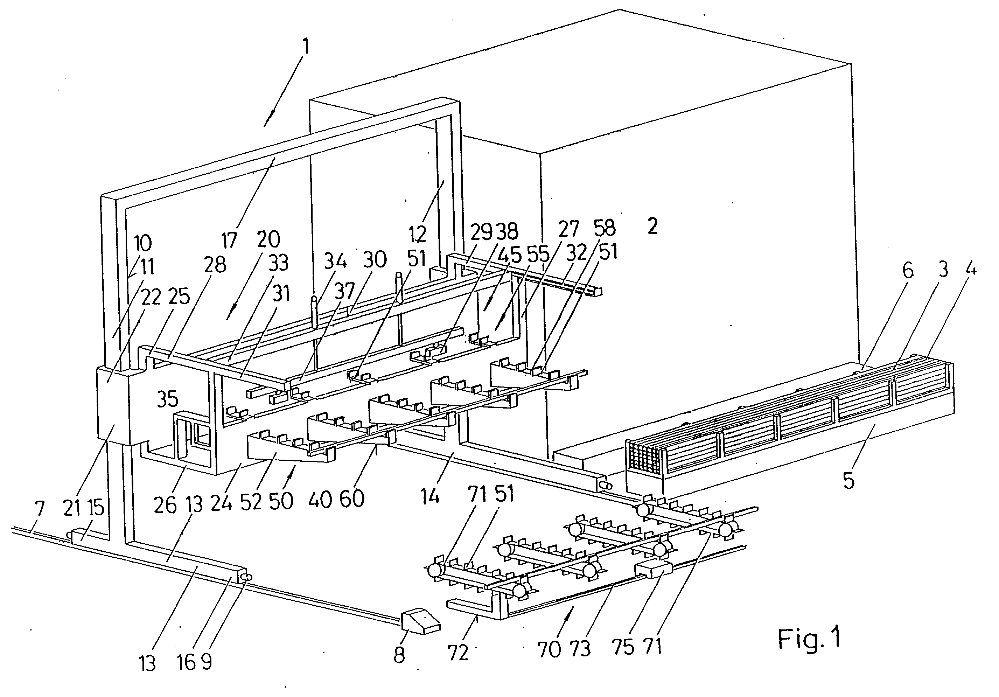

Die in Fig. 1 dargestellte Lageranlage enthält ein Kommissioniergerät 1, das entlang von Wabenregalen 2 bewegt werden kann. In Fig. 1 ist nur eines dieser Regale 2 dargestellt. Die Konstruktion der Wabenregale 2 ist allgemein bekannt. Das Lagergut 3 befindet sich in an sich bekannten Kassetten 4, von welchen nur eine in Fig. 1 dargestellt ist. Diese Kassette 4 befindet sich in einem der Endbereiche der Bewegungsbahn des Kommissioniergerätes 1, von wo sie durch das Kommissioniergerät 1 aufgenommen und dann in einem entsprechenden Fach eines der Regale 2 versorgt werden kann. In diesem Endbereich sind zwei Sockel 5 und 6 dargestellt, die neben dem Regal 2 stehen. Auf dem ersten Sockel 5 befindet sich die mit Lagergut 3 gefüllte Kassette 4, die im Gestell 2 zu versorgen ist. Auf dem zweiten Sockel 6 kann eine leere Kassette 4 abgestellt werden, die dem Gestell 2 entnommen worden ist. In einem Fach des Gestelles 2 befindet sich jeweils eine Kassette 4. Als Lagergut 3 kommen beispielsweise Stangen, Rohre, Schienen usw. in Frage. Das Kommissioniergerät 1 bewegt sich entlang den Wabenregalen 2 auf Schienen 7, wobei die Endpartien dieser Schienen 7 mit Prellböcken 8 versehen sind. Den Prellböcken 8 stehen Endschalter 9 am Kommissioniergerät 1 gegenüber.

Das Kommissioniergerät 1 enthält ein Traggestell 10, das sich portalartig zwischen den Schienen 7 erstreckt. Unten sind die Schenkel 11 und 12 des Rahmens 10 in je einem Fuss 13 und 14 verankert, welche Bestandteile eines Fahrgestells des Kommissioniergerätes darstellen. Der jeweilige Fuss 13 bzw. 14 ist mit den Endschaltern 9 sowie mit Rädern 15 und 16 versehen, die auf den Schienen 7 abrollen. Die oberen Partien der Schenkel 11 und 12 sind mit Hilfe eines Balkens 17 untereinander verbunden.

Zwischen den Schenkeln 11 und 12 erstreckt sich eine Hebebühne 20. Diese Hebebühne 20 weist einen etwa U-förmigen Träger 21 auf, dessen Schenkel 22 und 23 hohl sind. Durch die Hohlräume der Schenkel 22 und 23 gehen die vertikalen Schenkel 11 und 12 des Traggestelles 10 hindurch. Die Schenkel 11 und 12 und der Balken 17 sind hohl ausgebildet, so dass in diesen Seile, Rollen und hydraulische Hubzylinder untergebracht sein können, mit deren Hilfe die Bühne 20 vertikal bewegt werden kann. Durch die Kombination der Bewegungen in vertikaler Richtung und in horizontaler Richtung, kann die Hebebühne 20 das jeweils gewünschte Fach der Regale 2 erreichen.

Die Hebebühne 20 weist ferner eine Zelle 25 auf, in der oder an der die einzelnen Ein- bzw. Vorrichtungen des Kommissioniergerätes 1 angebracht sind. Diese Zelle 25 enthält zwei rahmenförmige Wangen 26 und 27, von welchen jede in der Nähe der vertikalen Schenkel 11 und 12 am Hebebühnenträger 21 befestigt ist. Die unteren vorderen Ecken der Wangen 26 und 27 sind mit Hilfe eines steifen Verbindungsstückes 24 miteinander verbunden. Die oberen vertikalen Abschnitte 28 und 29 der Wangen 26 und 27 sind mit vorstehenden Verlängerungen 31 und 32 versehen, die sich in der Bewegungsrichtung des Kommissioniergerätes 1 erstrecken. Sowohl die oberen Abschnitte 28 und 29 als auch die Verlängerungen 31 und 32 derselben sind hohl ausgeführt und geschlitzt, so dass sie als Führungen für eine kranartige Vorrichtung 30 zum Versetzen von Lagergut 3 in der Richtung der Bewegungsbahn des Kommissioniergerätes 1 dienen können.

Die Hebebühne ist funktionsmässig in zwei Bereiche unterteilt, nämlich in eine Arbeitsplattform 35 und in einen Lagergutsabschnitt 40. Diese Bereiche erstrecken sich zwischen den genannten Wangen 26 und 27 und deren Länge ist grösser als die Länge des längsten in den Regalen 2 gelagerten Materialstücks.

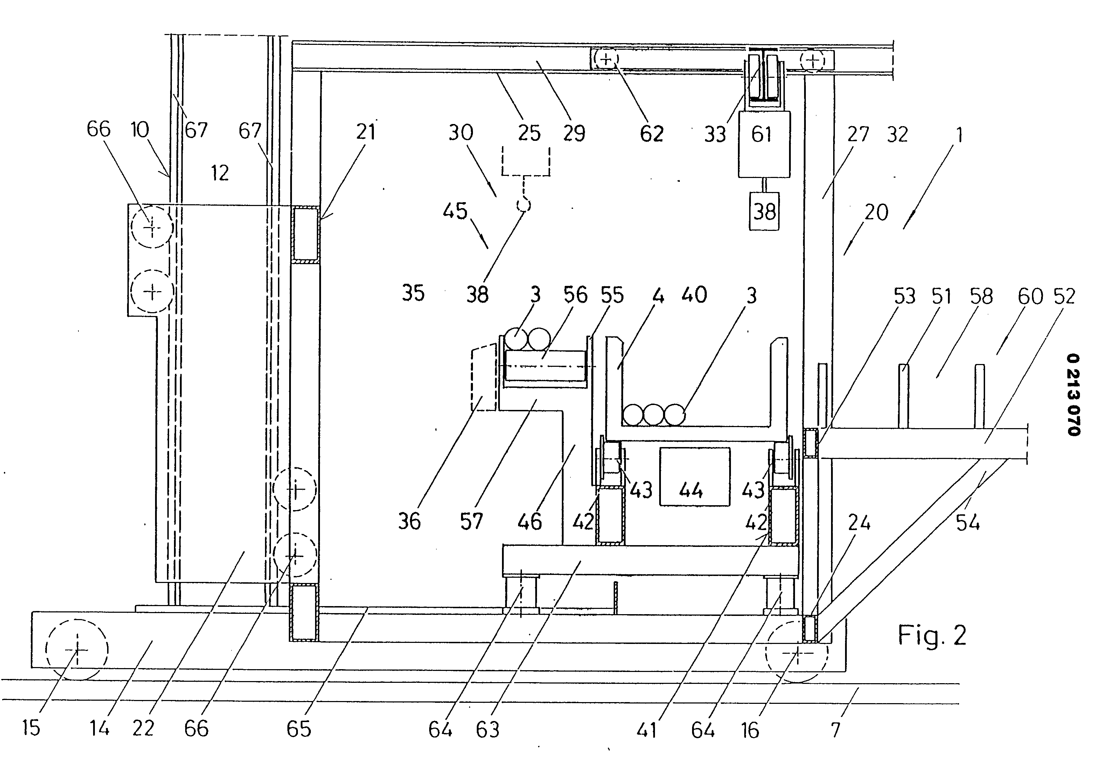

Auf der Arbeitsplattform 35 kann sich die das Kommissioniergerät 1 bedienende Person aufhalten. In diesem Bereich können sich auch die zur Bedienung des Kommissioniergerätes 1 erforderlichen Betätigungselemente befinden. Diese sind in Steuerpulten 36 (Fig. 2) zusammengefasst, von welchen sich je eines wenigstens im jeweiligen Endbereich der Arbeitsplattform 35 befindet. Der Boden 65 der Arbeitsplattform 35 ist vorteilhaft als ein Gitterrost ausgeführt. Der Bereich dieser Arbeitsplattform 35 grenzt bei der in Fig. 1 dargestellten Ausführungsform des Kommissioniergerätes 1 am Hebebbühnenträger 21 an.

Der Lagergutsabschnitt 40 der Hebebühne 20 weist eine Einrichtung 45 zur Handhabung von Lagergut 3 sowie eine Einrichtung 50 zum Ablegen von Lagergut 3 auf. Zur Handhabungseinrichtung 45 gehört der bereits erwähnte Kran 30 sowie eine Vorrichtung 41 zum Verschieben von Kassetten 4.

Der Kran 30 weist eine Haupttraverse 33 auf, deren Endpartien in den horizontalen Partien 28 und 31 sowie 29 und 32 der Zelle 25 gelagert und in diesen auch verschiebbar sind. Durch die Haupttraverse 33 gehen Hubzylinder 34 hindurch und an den Kolben dieser ist eine Hilfstraverse 37 befestigt. Von der Hilfstraverse 37 hängen Greifer 38 für die einzelnen Lagergutsstücke 3 herab. Diese Greifer 38 können als Elektromagnete, Saugelemente oder einfach als Haken für Ketten oder Seile ausgebildet sein.

Wie beispielsweise aus Fig. 2 ersichtlich ist, enthält die Kassetten-Verschiebevorrichtung 41 entlang von hohlen horizontalen Distanzstücken 42 verteilte Sätze von Rollen 43 mit Kranz, auf welche eine der Kassetten 4 mit Hilfe eines an sich bekannten Mechanismus 44 gebracht werden kann. Mit Hilfe desselben Verschiebemechanismus 44 kann die Kassette 4 aus einer solchen Führungsbahn 43 für die Kassetten 4 entfernt werden.

Die Führungsbahn 43 für die Kassetten 4 kann auch als einer der Bestandteile der Ablageeinrichtung 50 betrachtet werden. Die Ablageeinrichtung 50 enthält ferner eine Stützvorrichtung 55 für die einzelnen Stücke 3 von Lagergut sowie eine Vorrichtung 60 zur Aufnahme von Kommisionen.

Die Stützvorrichtung 55 befindet sich, gemäss Fig. 1, an der Innenseite der Frontwand der Zelle 25, während die Aufnahmevorrichtung 60 an der Aussenseite der genannten Frontwand angebracht ist. Diese beiden Vorrichtungen 55 und 60 sind als Ablageflächen ausgeführt, welche aufwärts gerichtete Zinken 51 aufweisen. Diese Zinken 51 bilden Reihen, welche sich parallel zur Längsrichtung der Zelle 25 und somit beispielsweise auch zu den Traversen 33 und 37 erstrecken und welche die Breite der jeweiligen Ablagefläche 55 bzw. 60 in Abteile 58 unterteilen, in welchen die einzelnen Kommissionen oder wenigstens die Bestandteile derselben vorübergehend aufbewahrt werden können. Wie aus Fig. 1 weiter ersichtlich ist, sind die Ablageflächen 55 und 60 durch von der Zellenwand abstehende Tragarme 52 gebildet, deren Oberseite mit den Zinken 51 versehen ist.

An einem Ende der Bewegungsbahn des Kommissioniergerätes 1 befindet sich ein Zwischenlager 70 für die im Kommissioniergerät 1 erstellten Kommissionen. Hier werden die Kommissionen gebündelt und sie können hier auch gelagert werden, bis sie aus dem Lagerraum wegtransportiert werden. Das Zwischenlager 70 enthält nebeneinander angeordnete Förderbänder 71, deren Aussenseite ebenfalls mit Zinken 51 versehen ist. Der Abstand dieser Zinken 51 voneinander ist derselbe wie der Zinkenabstand bei den Ablagefläche 55 bzw. 60. Die Fördebänder 71 sind auf einem Rahmen 72 montiert, dessen Höhe so gewählt ist, dass die Kommissionen durch eine stehende Person ohne Mühe gehandhabt werden können. Zum Rahmen 72 gehört auch eine Schiene 73, die sich quer zur Bewegungsrichtung des Kommissioniergerätes 1 erstreckt und entlang welcher eine Bündelungsvorrichtung 75 bewegt werden kann. Die Förderbänder 71 sind derart angeordnet, dass sie zwischen den Tragarmen 52 der Aufnahmevorrichtung 60 liegen. Die Kommissionen, die noch nicht gebündelt sind, können somit auf die Förderbänder 71 einfach abgesetzt werden, wobei nur dafür zu sorgen ist, dass die Zinken 51 der Förderbänder 71 in einer Reihe mit den Zinken 51 auf den Tragarmen 52 liegen. Mit Hilfe der Förderbänder 71 kann die jeweilige Kommission bis ans Ende derselben gebracht werden. Die das Zwischenlager 70 bedienende Person kann nun so oft wie erforderlich die Materialstücke der Kommission mit einem Band aus der Bündelvorrichtung 75 zusammenbinden, indem sie die Bündelvorrichtung 75 entlang der Schiene 73 bewegt.

In Fig. 2 ist das Kommissioniergerät 1 in vollständig abgesenkter Lage dargestellt. Die vorderen Pfosten der Wangen 26 und 27 sind mit Hilfe eines weiteren Verbindungsstückes 53 in einem Abstand vom Bodenbereich 65 der Zelle 25 miteinander verbunden. An dieses Verbindungsstück 53 sind die inneren Enden der Tragarme 52 angeschlossen, während die äusseren Endpartien der Tragarme 52 durch Streben 54 abgestützt sind, die sich an das untere Verbindungsstück 24 anschliessen.

Bei diesem Kommissioniergerät 1 befindet sich die Führungsbahn 43 für die Kassette 4 unmittelbar an der Innenseite der Vorderwand 53 der Hebebünnenzelle 25. An der Seitenwand 46 dieser Führungsbahn 43 befindet sich erst die Stützvorrichtung 55 für die einzelnen Stücke 3 von Lagergut. Die Stützvorrichtung 55 enthält Rollen 56, deren Achse etwa senkrecht zur Längsrichtung der Seitenwand 46 stehen. Die Rollen 56 sind in Konsolen 57 gelagert und mit Hilfe dieser an der Seitenwand 46 befestigt. Ueber die Länge der Seitenwand 46 ist eine Anzahl der genannten Rollen 56 verteilt, die sich praktisch auf derselben Höhe befinden. An der Stirnwand einer oder mehrerer Konsolen 57 kann das bereits erwähnte Steuerpult 36 befestigt sein. Man kann einzelne Stücke 3 von Lagergut aus den sich im Regal 2 befindlichen Kassetten 4 von Hand herausziehen, wenn das Gewicht der Materialstücke 3 derart ist, dass sie sich von Hand handhaben lassen, und auf der Stützvorrichtung 55 vorübergehend ablegen. Dann kann man diese Stücke mit Hilfe des Kranes 30 in einen der Abteile der Aufnahmevorrichtung 60 versetzen.

Der Greifer 38 des Kranes 30 über der Stützvorrichtung 55 ist als ein Haken ausgeführt, wobei in dieser Fig. 2 rechts auch die zweite Ausführungsmöglichkeit des Greifers 38 als Elektromagnet gezeigt ist. An die Haupttraverse 33 dieses Kranes 30 sind Seilwinden 61 angeschlossen, mit deren Hilfe die Elektromagnete 38 bis zum jeweiligen Materialstück 3 herabgesenkt werden können, um dieses zu ergreifen und zu versetzen. Aus Fig. 2 ist ferner ersichtlich, dass die Endpartie der Haupttraverse 33 an Wagen 62 angeschlossen sind, die sich im Inneren der oberen Partien 28 und 31 bzw. 29 und 32 der Zelle 25 bewegen können. Die Verlängerungsstücke 31 und 32 kragen dabei so weit aus, dass sich der Kran 30 unter anderem auch über die ganze Länge der Aufnahmevorrichtung 60 bewegen kann, um sogar im entferntesten Abteil 58 dieser Vorrichtung 60 Stücke für eine Kommission ablegen zu können.

Die Führungsbahn 43 und die Stützvorrichtung 55 ruhen auf einer Platte 63, die über Druckmessdosen 64 auf dem Boden 65 der Zelle 25 abgestützt ist. Der Steuerpult 36 ist mit einem entsprechenden Anzeigeinstrument (nicht dargestellt) versehen, von dem das Gewicht der sich auf der Führungsbahn 43 und der Stützvorrichtung 55 befindlichen Materialstücke 3 abgelesen werden können.

Fig. 2 zeigt auch Rollen 66, die sich im Inneren der Trägerschenkel 22 und 23 befinden und die für eine leichte Führung der Hebebühne 20 entlang den Schenkeln 11 und 12 des Traggestelles 10 sorgen. Diesem Zweck dienen auch Führungsvorsprünge 67 auf den Schmalseiten der Gestellschenkel 11 und 12, die die Rollen 66 entlang den Schenkeln 11 und 12 führen.

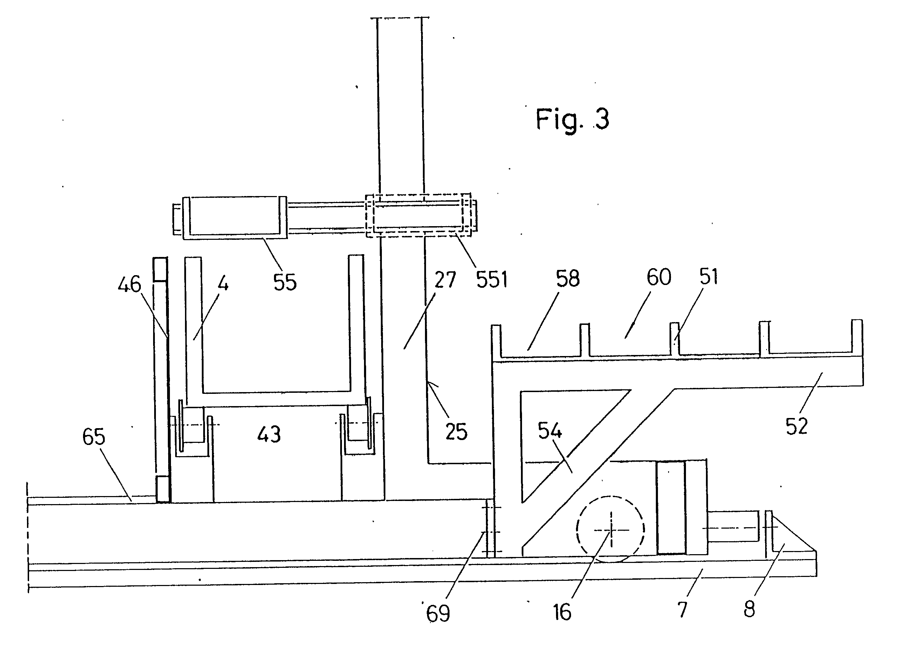

Beim Kommissioniergerät nach Fig. 2 kann es unter Umständen nachteilig sein, dass die Stützvorrichtung 55 sich eigentlich in jenem Bereich der Hebebühne 20 befindet, der für die das Kommissioniergerät 1 bedienende Person bestimmt ist. Um in diesem Bereich mehr Platz zu gewinnen, kann die Stützvorrichtung 55 oberhalb der Führungsbahn 43 angeordnet sein, wie dies in Fig. 3 dargestellt ist. Eine an dieser Stelle fest angeordnete Stützvorrichtung würde jedoch den Zugang zum Inneren der Kassette 4 durch den Kran 30 behindern. Deswegen ist die Stützvorrichtung 55 horizontal verschiebbar ausgeführt, so dass sie sich aus dem Bereich der Führungsbahn 43 nach vorne, d. h. aus dem Inneren der Zelle 25 heraus, herausfahren lässt. Dies kann mit Hilfe von horizontalen Hohlschienen 68 bewerkstelligt werden, die an der Innenseite der Wangen 26 und 27 in einer entsprechenden Höhe über dem Boden 65 befestigt sind. Die Verschiebung der Stützvorrichtung 55 kann von Hand durchgeführt werden. In ihrer vorderen Lage steht die Stützvorrichtung keineswegs im Wege, weil der Kran 30 sich oberhalb dieser befindet und weil, wenn erforderlich, sich diese Vorrichtung 55 auch gegenüber den durch die Zinken 51 definierten Abteilen 58 verschieben lässt.

Ferner zeigt Fig. 3, dass die Vorrichtung 60 für die vorübergehende Aufnahme ungebündelter Kommissionen an der Zelle 25 des Kommissioniergerätes 1 wegnehmbar befestigt sein kann. Die Befestigung der Vorrichtung 60 kann beispielsweise mit Hilfe von Schrauben 69 durchgeführt werden. Diese Ausführung des Kommissioniergerätes kann dann von besonderem Vorteil sein, wenn die Grösse der Abteile 58 in der Aufnahmevorrichtung 60 oft geändert werden soll.

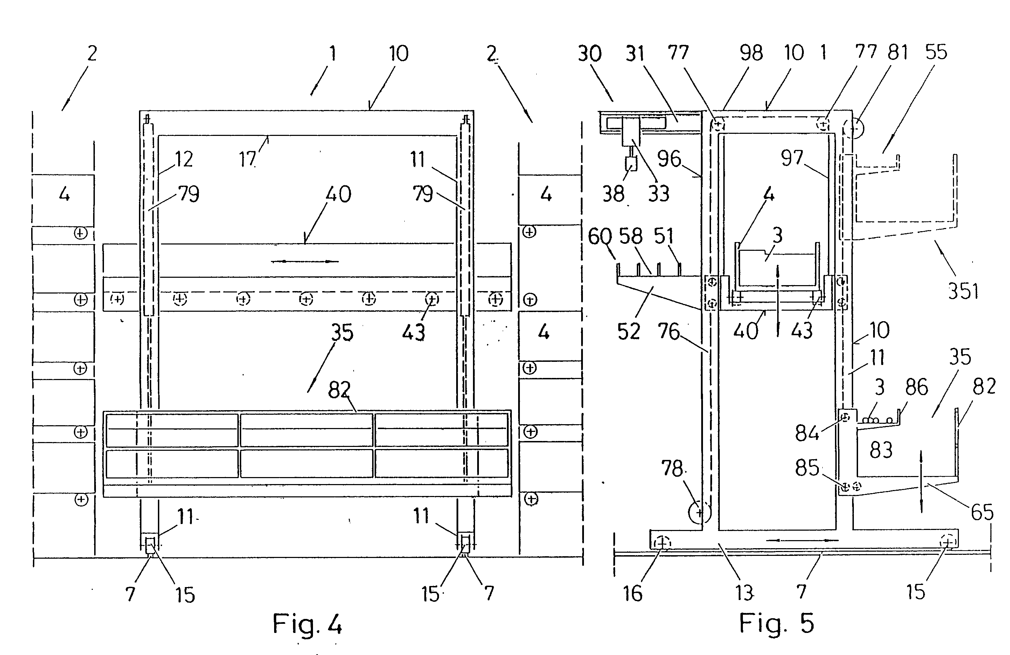

Eine weitere Ausführungsform der vorliegenden Anlage ist in den Fig. 4 und 5 dargestellt. Bei dieser Anlage weist das Kommissioniergerät 1 eine Arbeitsplattform 35 auf, deren Höhe unabhängig von der Höhe des Lagergutsabschnittes 40 einstellbar ist. Das Traggestell 10 besitzt zwei rahmenförmige Teile 96 und 97, die sich senkrecht zur Bewegungsrichtung des Bedienungsgerätes 1 erstrecken. Diese Rahmen 96 und 97 sind unten mit den Gestellfüssen 13 und 14 verbunden und oben sind sie mit Hilfe von Bindern 98 miteinander verbunden. Zwischen den Rahmen 96 und 97 befindet sich die Führungsbahn 43 für eine Kassette 4, wobei die Aufnahmevorrichtung 60 samt den Verlängerungen 31 von der Frontseite der Hebebühnezelle abstehen. Die Führungsbahn 43 und die Aufnahmevorrichtung 60 können mit Hilfe von Seilen 76 bewegt werden, die über sich ebenfalls im Traggestell 10 befindliche Umlenkrollen 77 geführt werden. Die dazu notwendige Kraft wird entweder durch eine Seilwinde 78 (Fig. 5) oder durch Hydraulikzylinder 79 in den Trägerschenkeln 11 und 12 erzeugt.

Die Arbeitsplattform 35 befindet sich an der hinteren äusseren Seite des Traggestelles 10 und sie weist den Boden 65 auf, an den sich ein Geländer 82 anschliesst. Die Innenseite der Plattform 35 ist mit einem vertikal verlaufenden Tragteil 83 versehen, über welchen die Plattform 35 am Traggestell 10 angeschlossen ist. Die Plattform 35 ist mit Rollen 84 und 85 versehen, die an den Schenkeln 11 bzw. 12 des Rahmens 10 geführt bewegbar sind. Es ist eine Antriebsvorrichtung 81 vorgesehen, die ermöglicht, die Plattform 35 in die gewünschte Höhe zu bringen. Solche Antriebsvorrichtungen sind allgemein bekannt und deswegen braucht diese Antriebsvorrichtung 81 hier nicht näher dargelegt zu werden. In Fig. 5 ist die Plattform 351 auch in einer ihrer oberen Lagen dargestellt.

Die Plattform 35 ist mit einem Trog 86 versehen, in welchen die einzelnen Stücke 3 von Lagergut aus den Wabenfächern der Gestelle 2 von Hand eingezogen werden können und aus welchem die Einzelstücke 3 in die Aufnahmevorrichtung 60 mit Hilfe des Krans 30 übertragen werden können. Da man damit rechnet, dass mit Hilfe der Plattform 35 nur Einzelstücke befördert werden, kann man den Antrieb 81 der Plattform 35 so auslegen, dass sich diese verhältnismässig schnell auf- und abwärts bewegt. Dadurch spart man Zeit im Vergleich mit jenem Fall, in dem wegen einzelnen Stücken von Lagergut der Lagergutsabschnitt 40 samt der diesem zugeordneten Handhabungseinrichtung 45 in Bewegung gesetzt werden muss. Die unabhängig bewegbare Plattform 35 ermöglicht somit eine grössere Effektivität der Arbeit der Lageranlage.

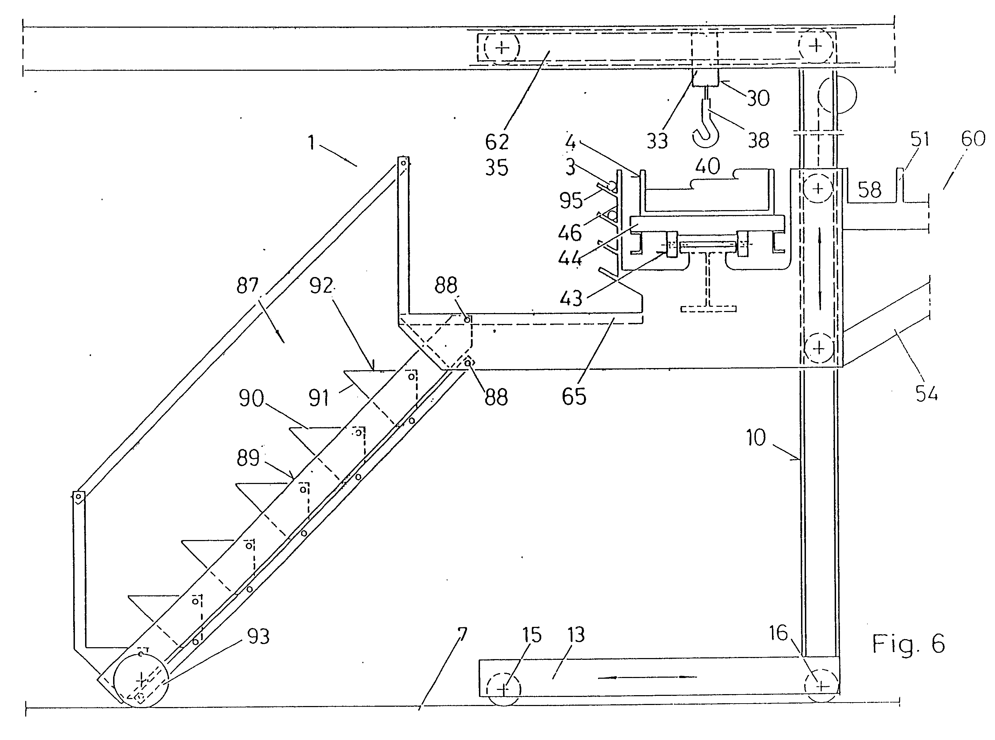

Zu einer weiteren Verbesserung des Ausnützungsgrades der Lagereinrichtung führt jene Massnahme, die in Fig. 6 dargestellt ist. Das Kommissionsgerät 1 weist den Rahmen 10 auf, bei dem die Plattform 35 und der Lagergutsabschnitt 40 ein Ganzes bilden. An den Boden 65 der Plattform 35 schliesst sich eine Treppe 87 an, die ermöglicht, die Plattform 35 und somit auch die ganze Hebebühne bei jeder Höheneinstellung derselben zu betreten bzw. zu verlassen. Diese Treppe 87 ist mit dem Boden 65 der Plattform 35 mit Hilfe von Gelenken 88 verbunden. Die Wangen 89 der Treppe 87 sind als Fachwerke ausgebildet. Der Auftritt 90 ist mit der darunter liegenden Steigung 91 der jeweiligen Treppenstufe 92 ebenfalls gelenkig verbunden. Das untere Ende der Treppe 92 ist mit Rädern 93 versehen, die auf dem Boden der Lagerhalle abrollen können.

Die Treppe 87 bietet somit die Möglichkeit, Einzelstücke von Lagergut aus der Plattform 35 sofort wegzutragen anstatt zu warten, bis das ganze Kommissioniergerät 1 in seine Endstellung gelangt. Entsprechendes gilt für den Fall, dass man ein oder mehrere Einzelstücke von Lagergut in den Gestellen versorgen will.

Der Lagergutsabschnitt 40 eines solchen Kommissioniergerätes 1 ist mit der Führungsbahn 43 für eine Kassette 4 versehen, die auch mit der Aus- und Einziehvorrichtung 44 für die Handhabung der Kassetten versehen ist. An der Seitenwand 46 der Führungsbahn 43 sind übereinander mehrere schräg verlaufende Arme 95 angebracht, welche Fächer für die Einzelstücke von Lagergut bilden. Hier können mehrere Sorten der Einzelstücke vorübergehend aufbewahrt werden. Mit Hilfe des Kranes 30 können diese Einzelstücke auch in die Aufbnahmevorrichtung 60 übertragen werden.

Diese Lageranlage ist so ausgeführt, dass die gewünschten Kommissionen automatisch, d. h. durch einen Computer gesteuert, zusammengestellt werden können. Eine solche Steuerung funktioniert ausserordentlich schnell, so dass dadurch die Voraussetzungen für eine sehr schnelle Zusammenstellung von Kommissionen gegeben sind. Von diesen Voraussetzungen kann man bei der vorstehend beschriebenen Anlage allerdings nicht ausreichend Gebrauch machen, weil die Bewegungen des Kommissioniergerätes sowie seiner Bestandteile wegen der grossen Masse derselben nur langsam verlaufen können. Diesen Nachteil beseitigt die folgende Ausführung dieser Anlage.

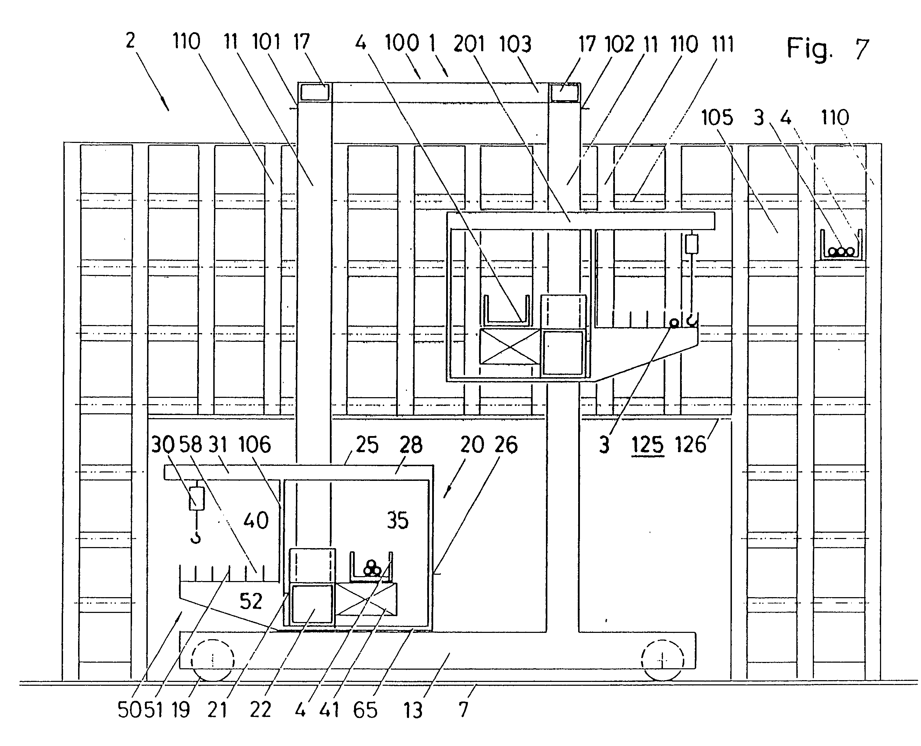

Die in Fig. 7 dargestellte Lageranlage enthält das Kommissioniergerät 1, das entlang von Wabenregalen 2 bewegt werden kann. In Fig. 7 ist nur eines dieser Regale 2 dargestellt, wobei noch zu sagen ist, dass in Fig. 7 nur ein Teil des Regalgestelles 2 dargestellt ist. Denn das Wabenregal 2 normalerweise viel länger als dargestellt ist. Das Lagergut 3 befindet sich in an sich bekannten Kassetten 4, von welchen nur drei Kassetten 4 in Fig. 7 dargestellt sind. Zwei dieser Kassetten 4 befinden sich im Kommissioniergerät 1, während die dritte Kassette 4 im Gestell 2 untergebracht ist. In einem Fach des Gestelles 2 befindet sich jeweils nur eine Kassette 4. Als Lagergut 3 kommen beispielsweise Stangen, Rohre, Schienen usw. in Frage. Das Kommissioniergerät 1 bewegt sich entlang dem Wabenregal 2 auf Rollen 19 und Schienen 7.

Das Kommissioniergerät 1 enthält ein Traggestell 100, das sich zwischen den Schienen 7 erstreckt. Dieses Traggestell 100 weist zwei portalartige Abschnitte 101 und 102 auf, die sich zwischen den Schienen 7 erstrecken und die parallel zueinander stehen. Jedes dieser Portale 101 bzw. 102 weist vertikal verlaufende Schenkel 11 und 12 auf, die mit einem Balken 17 untereinander vebunden sind. Oben sind die Portale 101 und 102 mittels je einen Joches 103 verbunden, dessen Längsrichtung mit der Bewegungsrichtung des Kommissioniergerätes 1 praktisch zusammenfällt. Unten sind die Schenkel 11 und 12 des Rahmens 100 in je einem Fuss 13 verankert, in dem sich die Räder 19 befinden.

Dem jeweiligen Portal 101 bzw. 102 ist je eine Hebebühne 20 und 201 zugeordnet, die sich zwischen den Schenkeln 11 und 12 des betreffenden Portals 101 bzw. 102 erstrecken. Das jeweilige Portal 101 bzw. 102 ist mit an sich bekannten Antriebsmitteln (nicht dargestellt) für die Hebebühnen 20 und 201 versehen, so dass sich die eine Hebebühne unabhängig von der anderen Hebebühne in vertikaler Richtung, d. h. entlang den Schenkeln 11 und 12, bewegen kann. In Fig. 7 ist die linke Hebebühne 20 in ihrer zuunterst liegenden Stellung dargestellt. Die in Fig. 7 rechts dargestellte Hebebühne 201 befindet sich in einer ihrer oberen Stellungen dargestellt, wo sie einem der Fächer 105 des Gestelles 2 gegenübersteht. Durch die Kombination der horizontalen Bewegungen des Kommissioniergerätes 1 entlang der Front des Gestelles 2 mit den vertikalen Bewegungen der jeweiligen Hebebühne 20 bzw. 201, können die Hebebühnen 20 und 201 jedes Fach 105 des Lagergestelles 2 erreichen.

Die Hebebühnen 20 und 201 weisen einen etwa U-förmigen und horizontal verlaufenden Träger 21 auf, dessen Schenkel 22 hohl sind. Durch die Hohlräume in diesen Schenkeln 22 gehen die vertikalen Schenkel 11 und 12 des Traggestelles 100 hindurch. Die Schenkel 11 und 12, die Balken 17 und die Joche 103 sind hohl ausgebildet, so dass in diesen Seile, Rollen und hydraulische Hubzylinder untergebracht sein können, mit deren Hilfe die Bühnen 20 und 201 in vertikaler Richtung bewegt werden können.

Die jeweilige Hebebühne 20 bzw. 201 weist eine Zelle 25 auf, in der oder an der die einzelnen Ein- bzw. Vorrichtungen derselben angebracht sind. Die Zelle 25 enthält zwei rahmenförmige Wangen 26. Jener vertikaler Abschnitt 106 des Rahmens 26, der sich in der Nähe des jeweiligen Schenkels 22 befindet, ist an diesem befestigt, so dass die Rahmen 26 mit dem Träger 21 in vertikaler Richtung bewegt werden können. Die unteren horizontalen Abschnitte der Rahmen 26 sind mit Hilfe eines Bodens 65 der Hebebühne 20 untereinander verbunden. Die oberen horizontalen Abschnitte 28 der Wangen 26 sind mit vorstehenden Verlängerungen 31 versehen, die sich in der Bewegungsrichtung des Kommissioniergerätes 1 erstrecken. Sowohl die oberen Abschnitte 28 des jeweiligen Rahmens 26 als auch die Verlängerungen 31 derselben sind hohl ausgeführt und geschlitzt, so dass sie als Führungen für eine kranartige Vorrichtung 30 zum Versetzen von Lagergut 3 in der Richtung der Bewegungsbahn des Kommissioniergerätes 1 dienen können.

Die jeweilige Hebebühne 20 ist funktionsmässig in zwei Bereiche unterteilt, nämlich in eine Arbeitsplattform 35 und in einen Lagergutabschnitt 40. Diese Bereiche erstrecken sich zwischen den genannten Wangen 26 und die Länge dieser Bereiche ist grösser als die Länge des längsten in den Regalen 2 gelagerten Materialstücks 3.

Auf der Arbeitsplattform 35 kann sich die das Kommissioniergerät 1 bedienende Person aufhalten. In diesem Bereich können sich auch die zur Bedienung des Kommissioniergerätes 1 erforderlichen Betätigungselemente befinden. Diese sind in Steuerpulten (nicht dargestellt) zusammengefasst, von welchen sich je eines wenigstens im jeweiligen Endbereich der Arbeitsplattform 35 befindet. Der Boden 65 der Arbeitsplattform 35 ist vorteilhaft als Gitterrost ausgeführt. Im Bereich der Arbeitsplattform 35 befindet sich ferner eine Vorrichtung 41 zum Handhaben von Kassetten 4, die einer an sich bekannten Art sein kann. Sie weist Rollen auf, auf welchen sich die jeweilige Kassette 4 bewegen kann. Ferner enthält die Vorrichtung 41 Mittel zum Herausziehen einer Kassete 4 sowie zum Einschieben derselben. Bei diesem Kommissioniergerät 1 befindet sich die Führungsbahn 41 für die Kassette 4 unmittelbar an der Innenseite der Vorderwand der Hebebühnenzelle 25.

Der Lagergutsabschnitt 40 der Hebebühne 20 weist eine Einrichtung zur Handhabung von Lagergut 3 sowie eine Einrichtung 50 zum Ablegen von Lagergut 3 auf. Zur Handhabungseinrichtung gehört der bereits erwähnte Kran 30. Die Ablageeinrichtung 50 enthält Arme 52 zur Aufnahme von Kommissionen 3, die an der Aussenseite der Zelle 25 der Hebebühne 20 angebracht sind. Diese Arme 52 weisen Ablageflächen auf, welche mit aufwärts gerichteten Zinken 51 versehen sind. Diese Zinken 51 bilden Reihen, welche sich parallel zur Längsrichtung der Zelle 25 erstrecken und welche die Breite der jeweiligen Ablagefläche in Abteile 58 unterteilen, in welchen die einzelnen Kommissionen 3 oder wenigstens Bestandteile derselben vorübergehend aufbewahrt werden können.

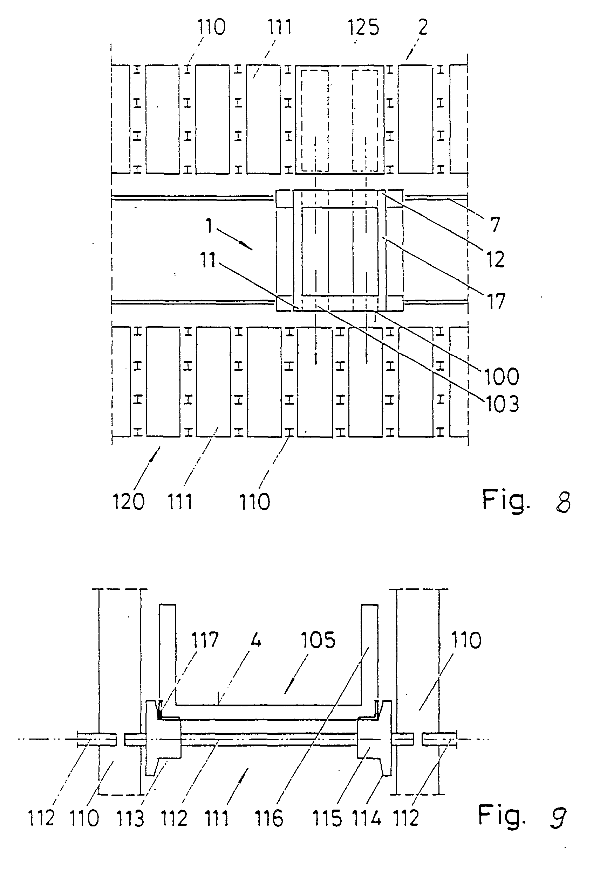

Das Regalgestell 2 weist Pfosten 110 auf, die Reihen bilden, wie dies aus Fig. 8 gut ersichtlich ist. Diese Pfosten 110 sind in horizontaler Richtung untereinander in einer an sich bekannten Weise so verbunden, dass sie das Gerippe eines etwa quaderförmigen Lagergestelles 2 bilden. Zwischen den Pfosten 110 benachbarter Pfostenreihen befinden sich übereinander angeordnete Böden 111, auf welchen die jeweilige Kassette 4 ruht, wenn sie sich in einem der Fächer 105 befindet. Ein Fach 105 umfasst somit den jeweiligen Boden 111 und den darüber liegenden Hohlraum, in dem sich eine Kassette 4 befinden kann.

In Fig. 9 sind die wesentlichen Teile eines Regalfaches 105 dargestellt. An den Pfosten 110 sind die Endpartien von Wellen 112 gelagert. Im Bereich der Endpartie der jeweiligen Welle 112 befinden sich Rollen 113 mit Kranz 114, wobei der Kranz 114 dem Pfosten 110 näher liegt als die zylinderförmige Partie 115 der jeweiligen Rolle 113. Auf der zylinderförmigen Partie 115 der Rollen 113, die sich auf hintereinander liegenden und horizontal angeordneten Wellen 112 befinden, ruht die Kassette 4. Der Kranz 114 verhindert, dass die Kassette 4 mit dem Pfosten 110 in Berührung kommt. Denn dies würde eine Störung des Betriebes der Lageranlage zur Folge haben. Die Kassette 4 selbst weist stehende U-Stücke 116 auf, welche über die ganze Länge der Kassette 4 verteilt sind. Die unteren Eckpartien der U-Stücke 116 sind mit Hilfe von Winkeleisen 117 verbunden, welche sich über die ganze Länge der Kassette 4 erstrecken.

Im mittleren Bereich des Gestelles 2 ist eine Schleuse 125 ausgeführt. Diese Schleuse 125 entsteht dadurch, dass die Fächer 105 in einem bestimmten Bereich des Regales 2 ausgelassen werden. Die dementsprechend verkürzten Pfosten 110 sind auf einem horizontalen Träger 126 abgestützt. In der Schleuse 125 befinden sich an sich bekannte Geräte (nicht dargestellt), auf welchen die Kassetten 4 abgestellt werden können, wenn sie in das Lager eingebracht oder aus diesem entfernt werden sollen. Dies kann der Fall sein, wenn leere Kassetten 4 wieder aufgefüllt werden sollen oder dgl.

Die Schleuse 125 in Fig. 7 ist breiter ausgeführt als dies in der Praxis der Fall sein wird. Denn eine so breite Schleuse 125 ermöglicht, die einzelnen Teile der Hebebühne 20 überschaubarer darzustellen. Die Breite der Schleuse 125 sollte eigentlich nur der Breite der Arbeitsplattformen 35 der beiden Hebebühnen 20 und 201 entsprechen, um möglichst grosses Fassungsvolumen des Gestelles 2 zu erreichen.

Wie aus Fig. 8 ersichtlich ist, genügt es, wenn nur eines der Regale 2 oder 120 die Schleuse 125 aufweist. Es versteht sich jedoch, dass auch mehrere Schleusen 125 vorgesehen sein können, beispielsweise verteilt über die Länge eines der Gestelle 2.

Wenn Kommissionen zusammengestellt werden sollen, so bewegt sich eine der Hebebühnen 20 bzw. 201 in vertikaler Richtung so, dass sie die Höhe jenes Faches 105 erreicht, dem die erforderlichen Materialstücke 3 entnommen werden sollen. Zugleich bewegt sich das Kommissioniergerät 1, wenn erforderlich, in horizontaler Richtung ebenfalls auf das genannte Fach 105 zu. Die Kassette 4 wird aus dem Fach 105 ausgezogen und sie ruht dann in der Hebebühne auf der Verschiebevorrichtung 41. Die Bedienungsperson kann mit Hilfe des Kranes 30 die erforderlichen Stücke 3 in der geforderten Anzahl in den einzelnen Fächern 58 der Einrichtung 50 ablegen. Solche Arbeiten nehmen eine gewisse Zeitspanne in Anspruch. Während dieser Zeitspanne kann sich das Kommissioniergerät 1 und die andere der Hebebühnen so bewegen, dass diese andere Hebebühne ein anderes Lagerfach 105 erreicht, dem Material 3 entnommen werden soll oder in dem eine sich in dieser Hebebühne befindliche Kassette 4 abgelagert werden soll. Durch eine geeignete Kombination dieser Möglichkeiten kann man pro Zeiteinheit wesentlich mehr Kassetten 4 be- bzw. entladen und gegebenenfalls auch durch Schleusen zubringen, als das bei den bekannten Lageranlagen der Fall war.

**Patentansprüche**

1. Lageranlage mit einem Kommissioniergerät (1), das entlang von Wabenregalen (2) bewegbar ist und wenigstens eine Hebebühne (20) aufweist, wobei diese Hebebühne eine Arbeitsplattform (35) und einen Lagergutabschnitt (40) aufweist, der eine Ablageeinrichtung (50) für das Lagergut sowie eine Einrichtung (45) zur Handhabung von Lagergut enthält, dadurch gekennzeichnet, dass die Ablageeinrichtung (50) wenigstens eine Vorrichtung (60) zur Aufnahme ausgewählter Stücke von Lagergut aufweist, dass diese Aufnahmevorrichtung (60) aufwärts gerichtete Zinken (51) enthält, welche die Breite der Aufnahmevorrichtung in Abteile (58) unterteilt, in welchen die einzelnen Kommissionen vorübergehend gelagert werden können, und dass die Handhabungseinrichtung (45) eine kranartige Vorrichtung (30) zum Versetzen der Stücke von Lagergut senkrecht zur Längsrichtung der Ablageeinrichtung (50) aufweist.

2. Lageranlage nach Anspruch 1, dadurch gekennzeichnet, dass die Aufnahmevorrichtung (60) für die Kommissionen an der Aussenseite der Hebebühnenzelle (25) angebracht ist.

3. Lageranlage nach Anspruch 1, dadurch gekennzeichnet, dass die Ablageeinrichtung (50) ferner eine Stützvorrichtung (55) für das ausgelagerte Gut aufweist und dass sich diese Stützvorrichtung parallel zur Aufnahmevorrichtung (60) für die Kommissionen erstreckt.

4. Lageranlage nach Anspruch 1, bei der das Lagergut sich in Kassetten befindet, dadurch gekennzeichnet, dass die Ablageeinrichtung (50) ferner eine Bahn (43) zur Führung einer Kassette (4) aufweist und dass die Handhabungseinrichtung (45) ferner eine Vorrichtung (44) zum Verschieben von Kassetten in der Längsrichtung derselben aufweist.

5. Lageranlage nach den Ansprüchen 3 und 4, dadurch gekennzeichnet, dass die Stützvorrichtung (55) sich oberhalb der Führungsbahn (43) für eine Kassette befindet und dabei so verschiebbar ist, dass sie ausserhalb der Grundfläche der Führungsbahn (43) gebracht werden kann oder dass sich die Stützvorrichtung (55) an der der Arbeitsplattform (35) zugewandten Seite der Führungsbahn (43) befindet.

6. Lageranlage nach den Ansprüchen 3 und 4, dadurch gekennzeichnet, dass die kranartige Vorrichtung (30) zum senkrechten Versetzen von Lagergut eine Traverse (33) enthält, von der Greifer (38) zum Ergreifen von Lagergut herabhängen und dass die Endabschnitte der Traverse (33) in Schienen (28, 29, 31, 32) verschiebbar gelagert sind, welche sich über der Stützvorrichtung (55), der Führungsbahn (43) und über der Aufnahmevorrichtung (60) für die Kommissionen erstrecken.

7. Lageranlage nach Anspruch 1, dadurch gekennzeichnet, dass ein Zwischenlager (70) für die Kommissionen vorgesehen ist, dass sich dieses Zwischenlager in einem der Endbereiche der Bewegungsbahn des Kommissioniergerätes (1) befindet und nebeneinander liegende Förderbänder (71) aufweist und dass diese Förderbänder mit abstehenden Zinken (51) versehen sind, deren Abstand voneinander praktisch gleich gross ist wie der Abstand der Zinken (51) bei der Aufnahmevorrichtung (60) für die Kommissionen.

8. Lageranlage nach Anspruch 7, dadurch gekennzeichnet, dass am äusseren Ende der Förderbänder (71) sich eine Vorrichtung (75) zur Bündelung der Kommissionen befindet und dass diese Bündelungsvorrichtung mit Hilfe von Schienen (73) entlang den äusseren Enden der Förderbänder (71) verschiebbar ist.

9. Lageranlage nach Anspruch 3, dadurch gekennzeichnet, dass die Arbeitsplattform (35) vom Lagergutabschnitt (40) der Hebebühne (20) unabhängig in vertikaler Richtung bewegbar ist.

10. Lageranlage nach Anspruch 3, dadurch gekennzeichnet, dass eine Treppe (87) sich an die Arbeitsplattform (35) anschliesst, die bis in den Flurbereich der Anlage reicht.

11. Lageranlage nach Anspruch 1, mit einem Kommissioniergerät, das entlang von Wabenregalen (2) bewegbar ist, dadurch gekennzeichnet, dass das Kommissioniergerät (1) wenigstens zwei Hebebühnen (20, 201) aufweist, die unabhängig voneinander bewegbar sind.

12. Lageranlage nach Anspruch 11, dadurch gekennzeichnet, dass wenigstens eines der Wabenregale (2 bzw. 120) eine Schleuse (125) aufweist.

13. Lageranlage nach Anspruch 11, dadurch gekennzeichnet, dass die Fächer (105) der Wabenregale (2, 120) einen Boden (111) aufweisen, der Rollen (113) enthält, auf welchen die jeweilige Kassette (4) ruhen kann.

## Claims

1. A storage system having a load carrier (1) which is movable along storage frames (2) with bins in honeycomb arrangement and which is provided with at least one lift stage (20) comprising a working platform (35) and a platform (40) for the stored articles whereby this last said platform (40) is provided with an intermediate storing device (50) and a handling device (45) for said articles characterised in that the intermediate storing device (50) has at least one means (60) for receiving chosen pieces of said articles, that this receiving means (60) is provided with upwardly extending tines (51) subdividing the width of the receiving means into compartments (58) in which the respective charge of the articles can be intermediary stored, and that the handling device (45) comprises a crane apparatus (30) serving for displacement of the pieces of the stored articles perpendicularly to the longitudinal direction of the intermediate storing device (50).

2. A storage system as defined in claim 1 characterised in that said means (60) for receiving charges is arranged on the exterior side of the cabin (25) of said lift stage (20).

3. A storage system as defined in claim 1 characterised in that the intermediate storing device (50) further comprises a support (55) for the removed stored articles and that this support extends in parallel to the receiving means (60).

4. A storage system as defined in claim 1 in which the stored articles are placed in boxes characterised in that the intermediate storing device (50) further comprises a path (43) for guiding a box and that the handling device (45) further comprises a device (44) for moving the boxes in the direction of their length.

5. A storage system as defined in claims 3 and 4 characterised in that the support (55) is placed over the guiding path (43) for the box and that it is at the same time displaceable in such a manner that it can be moved out of the floor region of the guiding path (43) or that the support (55) is placed on that one side of the guiding path (43) which faces the working platform (35).

6. A storage system as defined in claims 3 and 4 characterised in that a crane like apparatus (30) for perpendicular movement of the stored articles has a cross beam (33) from which devices (38) for gripping the stored articles hang down and that the end portions of the cross beam (33) are displaceable in rails (28, 29, 31, 32) which extend above the support (55), the guiding path (43) and above the receiving means (60) for the charges of said articles.

7. A storage system as defined in claim 1 characterised in that it comprises a transitory store (70) for the charges, that this transitory store is placed in one of the end regions of the moving path of the load carrier (1), that it is provided with conveyors (71) placed parallel to each other and that these conveyors (71) are provided with upstanding tines (51) whereby the distance between them is the same as the distance between the tines (51) on the receiving means (60) for the charges.

8. A storage system as defined in claim 7 characterised in that a device (75) for bunching of the charges is located at the outer end of said conveyors (71) and that this bunching device is displaceable by aid of rails (73) along the outer ends of the conveyors (71).

9. A storage system as defined in claim 3 characterised in that the working platform (35) is movable in a vertical direction independently of the lift stage (20).

10. A storage system as defined in claim 3 characterised in that a staircase (87) is attached to the working platform (35) and that this staircase reaches onto the floor of the storage system.

11. A storage system as defined in claim 1 having a load carrier movable along the storage frames characterised in that said load carrier (1) is provided with at least two lift stages (20, 201) which can be moved independently from each other.

12. A storage system as defined in claim 11 characterised in that at least one of said storage frames (2, 120, resp.) is provided with a passage (125).

13. A storage system as defined in claim 11 characterised in that the bottom (111) of the bins (105) in said storage frames (2, 120) comprises rollers (113) upon which the respective box can rest.

## Revendications

1. Dispositif de stockage avec un appareil de préparation des commandes (1) qui est mobile le long de rayonnages (2) et présente au moins un plateau élévateur (20), dans lequel ce plateau élévateur comprend une plate-forme de travail (35) et un secteur de produits stockés qui contient un dispositif de dépôt (50) pour la marchandise stockée ainsi qu'un dispositif (45) pour la manutention de la marchandise, caractérisé en ce que le dispositif de dépôt (50) comprend au moins un dispositif (60) pour la réception des unités de marchandise stockée, en ce que ce dispositif de réception (60) présente des dents (51) dirigées vers le haut, qui divisent la largeur du dispositif de réception en compartiments (58) dans lesquels les marchandises préparées isolément peuvent être passagèrement entreposées, et en ce que le dispositif de manutention (45) présente un dispositif de levage (30) pour transporter les unités de marchandise entreposées perpendiculairement à la direction longitudinale du dispositif de dépôt (50).

2. Dispositif de stockage selon la revendication 1, caractérisé en ce que le dispositif de réception (60) pour les marchandises préparées est placé du côté extérieur des alvéoles (25) du plateau élévateur.

3. Dispositif de stockage selon la revendication 1, caractérisé en ce que le dispositif de dépôt (50) présente en outre un dispositif d'appui (55) pour la marchandise déstockée et en ce que ce dispositif d'appui s'étend parallèlement au dispositif de réception (60) pour les marchandises préparées.

4. Dispositif de stockage selon la revendication 1, dans lequel les marchandises stockées se trouvent dans des châssis, caractérisé en ce que le dispositif de dépôt (50) présente en outre une voie (43) pour conduire un châssis (4), et en ce que le dispositif de manutention (45) présente de plus un dispositif (44) pour décaler les châssis dans leur direction longitudinale.

5. Dispositif de stockage selon les revendications 3 et 4, caractérisé en ce que le dispositif d'appui (55) se trouve au-dessus de la voie de guidage (43) d'un châssis et, de ce fait, peut être décalé de telle sorte qu'il puisse être amené en dehors de la base de la voie de guidage (43), ou bien en ce que le dispositif d'appui (55) se trouve du côté de la voie de guidage (43) qui est tourné vers la plate-forme de travail.

6. Dispositif de stockage selon les revendications 3 et 4, caractérisé en ce que le dispositif de levage (30) pour le déplacement transversal des marchandises stockées comprend une traverse (33) pour prendre, plus bas, la marchandise stockée saisie par un crochet (38), et en ce que les secteurs extrêmes de la traverse (33) sont disposés mobiles sur des rails (28, 29, 31, 32), qui s'étendent sur le dispositif d'appui (55), la voie de guidage (43) et le dispositif de réception (60) pour les marchandises préparées.

7. Dispositif de stockage selon la revendication 1, caractérisé en ce qu'un dépôt intermédiaire (70) est prévu pour les préparations, en ce que ce dépôt intermédiaire se trouve dans une région d'extrémité de la voie de circulation de l'appareil de préparation (1) et présente des bandes transporteuses (71) situées côte à côte, et en ce que ces bandes transporteuses sont munies de dents (51) espacées, dont l'écartement mutuel est pratiquement égal à l'écartement des dents du dispositif de réception (60) des préparations.

8. Dispositif de stockage selon la revendication 7, caractérisé en ce qu'aux extrémités externes des bandes transporteuses (71) se trouve un dispositif (75) pour assembler les préparations et en ce que ce dispositif de liaison est mobile, à l'aide de rails (73), entre les extrémités externes des bandes transporteuses (71).

9. Dispositif de stockage selon la revendication 3, caractérisé en ce que la plate-forme de travail (35) du secteur de marchandises déposée (40) est mobile verticalement, indépendamment du plateau élévateur (20).

10. Dispositif de stockage selon la revendication 3, caractérisé en ce qu'un escalier (87) est relié à la plate-forme de travail (35) et s'étend jusqu'au plancher de l'installation.

11. Dispositif de stockage selon la revendication 1, avec un appareil de préparation mobile le long de rayonnages (2), caractérisé en ce que l'appareil de préparation (1) comporte au moins deux plateaux élévateurs (20, 201) qui sont mobiles indépendamment l'un de l'autre.

12. Dispositif de stockage selon la revendication 11, caractérisé en ce qu'au moins un des rayonnages (2 ou 120) présente un sas (125).

13. Dispositif de stockage selon la revendication 11, caractérisé en ce que les compartiments (105) des rayonnages (2, 120) comportent un fond (111) muni de rouleaux (113), sur lesquels chaque châssis (4) peut reposer.

Fig. 1

Fig. 2

Fig. 3

0 213 070

Fig. 5

Fig. 4

Fig. 6

Fig. 7

Fig. 8

Fig. 9